# EUROPÄISCHE PATENTSCHRIFT

(11) **EP 3 165 975 B1**
(45) Veröffentlichungstag und Bekanntmachung des Hinweises auf die Patenterteilung: **17.06.2020**
(21) Anmeldenummer: 15193512.9
(22) Anmeldetag: 06.11.2015
(51) Int. Cl.: G05B 19/042, G05B 19/418

(54) **VERFAHREN UND ANORDNUNG ZUR FERNBEDIENUNG VON FELDGERÄTEN ZUMINDEST EINER AUTOMATISIERUNGSANLAGE**
METHOD AND ASSEMBLY FOR THE REMOTE CONTROL OF FIELD DEVICES OF AT LEAST ONE AUTOMATION SYSTEM
PROCEDE ET AGENCEMENT DE TELECOMMANDE D'APPAREILS DE TERRAIN D'AU MOINS UNE INSTALLATION D'AUTOMATISATION

(43) Veröffentlichungstag der Anmeldung: 10.05.2017
(73) Patentinhaber: Schneider Electric Industries SAS, 92500 Rueil-Malmaison (FR)
(72) Erfinder: HARNISCHFEGER, Michael, 63776 Mömbris (DE)
(74) Vertreter: Stoffregen, Hans-Herbert

(56) Entgegenhaltungen:
- EP-A2- 2 863 281
- DE-A1-102007 035 158
- DE-A1-102010 040 055

## Beschreibung

Die Erfindung bezieht sich auf ein Verfahren zur Fernbedienung von zumindest einem Feldgerät in zumindest einer Automatisierungsanlage mit einem Bediengerät, wobei in dem Bediengerät ein Bedienprogramm abläuft, das mit einer Server-Rahmen-Applikation kommuniziert, die auf einem der zumindest einen Automatisierungsanlage zugeordneten Feldgeräte-Management-Modul abläuft und zum Bedienen der Feldgeräte der entsprechenden Automatisierungsanlage dient, wobei in der Server-Rahmen-Applikation Gerätetreiber-Pakete und zumindest ein Kommunikations-Gerätetreiber-Paket zum Bedienen der Feldgeräte installiert sind, wobei die Gerätetreiber-Pakete und das zumindest eine Kommunikations-Gerätetreiber-Paket jeweils eine Logik-Gerätetreiber-Komponente aufweisen, welche Daten und Funktionen zumindest eines der Feldgeräte zur Verfügung stellt sowie eine Benutzeroberflächen-Gerätetreiber-Komponente aufweisen, welche Daten und Funktionen einer Benutzeroberfläche zumindest eines der Feldgeräte zur Verfügung stellt. Ferner bezieht sich die Erfindung auf eine Anordnung zur Durchführung des Verfahrens nach dem Oberbegriff des Anspruchs 8.

Ein Verfahren zur Fernbedienung eines Feldgerätes der Automatisierungstechnik ist in der DE 10 2004 019 253 A1 beschrieben.

Für die Bedienung der Feldgeräte werden nach dem Stand der Technik alle Funktionen und Parameter einschließlich der grafischen Bedienelemente dem Bedienprogramm bekannt gemacht. Dies wird über spezielle Gerätetreiber, sogenannte DTMs (Device Typ Manager), die der FDT (Field Device Tool) Spezifikation entsprechen, ermöglicht.

FDT ist ein Hersteller-übergreifendes und Feldbus-unabhängiges Konzept in der Automatisierungstechnik, welches die Bedienung und insbesondere die Parametrierung von unterschiedlichen Feldgeräten verschiedener Hersteller und unterschiedlichen Feldbussen mit nur einem einzigen Programm ermöglicht. FDT ist eine Spezifikation für eine Software-Schnittstelle. Diese Software-Schnittstelle beschreibt den Datenaustausch zwischen einer Anwendung und Software-Komponenten für die Feldgeräte. FDT ist als Internationale Norm IEC62453 und ISA 103 standardisiert.

FDT wird sowohl in prozesstechnischen Anlagen als auch in der Fabrikautomation eingesetzt. Das Konzept unterstützt sowohl einfache Feldgeräte (mit wenigen Parametern) als auch komplexe Geräte (mit vielen Parametern und Modulen).

Um für die Anwender die Vielfalt der Gerätebedien-Tools gering zu halten, verfolgt FDT das wesentliche Ziel, die verschiedenen Geräte-Softwaren z. B. Gerätetreiber-DTMs in einer gemeinsamen Rahmen-Anwendung (FDT-Frame-Application) zusammenzuführen. Von dieser zentralen Rahmen-Anwendung aus kann auf die verschiedenen Feldgeräte zugegriffen werden und mit den entsprechenden Geräte-DTMs die Konfiguration der zugehörigen physikalischen Geräte erfolgen.

FDT unterstützt eine große Anzahl von Kommunikationsprotokollen sowie die Kommunikation über geschachtelte Netzwerkprotokolle hinweg. Mit Hilfe der standardisierten Schnittstelle zwischen DTMs und Rahmen-Anwendung können die DTMs in verschiedenen Rahmen-Anwendungen systemunabhängig eingesetzt werden.

Ein "Device Typ Manager" (DTM) entspricht einer gerätespezifischen Software-Komponente, welche Daten für das Gerät aufbereitet. So umfasst ein DTM eine Logik-Gerätetreiber-Komponente, welche alle Funktionen, die Struktur sowie die Parametrierung des Feldgerätes bereitstellt sowie eine Benutzeroberflächen-Gerätetreiber-Komponente, welche eine Benutzeroberfläche für ein bestimmtes Feldgerät oder für eine Gerätefamilie bereitstellt. DTMs werden wie ein Programm auf einer Recheneinheit installiert, können jedoch nur aus der Rahmen-Applikation heraus genutzt werden.

Neben den DTMs für Feldgeräte (Geräte-DTMs) gibt es auch DTMs für Kommunikationsanschaltungen (Kommunikations-DTMs), beispielsweise für Bus-Anschaltkarten oder HART-Modems. Die Kommunikations-DTMs setzten den Feldbusunabhängigen Teil des FDT-Konzeptes um.

Bei dem bekannten Verfahren kommuniziert eine Client-Applikation, die auf einem Handbediengerät (Kleinrechner) abläuft, mit einem Bedienprogramm für Feldgeräte oder einem Feldgeräte-Management-Modul, das auf einer größeren Rechnereinheit wie Workstation abläuft, über eine Service-Dienst-Schnittstelle. Dabei umfasst das Bedienprogramm oder das Feldgeräte-Management-Modul eine Rahmen-Applikation, die zum herkömmlichen Bedienen von Feldgeräten mittels entsprechender Gerätetreiber nach dem Client-Server-Prinzip dient. Ferner ist ein Service-Dienst-Treiber für die Rahmen-Applikation vorgesehen, der die Kommunikation zwischen dem Bedienprogramm und der Service-Dienst-Schnittstelle ermöglicht.

Dadurch soll ermöglicht werden, von einem Handbediengerät aus von außen auf einfache Weise ein Feldgerät der Automatisierungstechnik zu bedienen. Zur Kommunikation zwischen Handbediengerät und Rechnereinheit wird ein lokales Funknetzwerk wie z.B. WLAN oder eine Bluetooth-Verbindung vorgeschlagen.

Bei dem bekannten Verfahren laufen sowohl die Logik-Gerätetreiber-Komponenten als auch die Benutzeroberflächen-Gerätetreiber-Komponenten in ein und derselben Rahmen-Applikation ab, so dass neben einer Anzeigeeinheit auch eine hohe Rechenleistung und ein großer Speicherbedarf erforderlich sind. Dies hat zur Folge, dass die Applikationen nur auf größeren Rechnereinheiten wie Workstations oder Servern eingesetzt werden können. Des Weiteren ist eine Fernbedienung von Feldgeräten in räumlich verteilten Automatisierungsanlagen mit dem bekannten Verfahren schwierig, da direkter Zugang zu den Rechnereinheiten erlaubt sein muss, was in der Praxis unerwünscht sein kann.

Des Weiteren werden nach dem Stand der Technik nur Daten über die Service-Schnittstelle ausgetauscht, die auf einer im Bediengerät fest implementierten generischen Benutzeroberfläche angezeigt werden. Auch sind Erweiterungen möglich, wonach webbasierte Visualisierung-Benutzeroberflächen von der Workstation geladen werden. Dabei handelt es sich jedoch um unabhängige Benutzeroberflächen, die über den Web Service publiziert werden und separat angesprochen werden müssen.

Die DE 10 2011 087 826 A1 betrifft eine Vorrichtung zur Bedienung von mindestens einem Feldgerät der Automatisierungstechnik mittels einer mit dem Feldgerät verbundenen oder verbindbaren Bedieneinheit. Der Bedieneinheit ist ein außerhalb des Feldgeräts angeordneter Server zugeordnet, wobei der Server Feldgeräte-typspezifische, den jeweiligen Feldgeräten zugeordnete Webseiten zur Verfügung stellt und wobei der Bedieneinheit ein Bedienprogramm zugeordnet ist, welches einen Browser zur Verfügung stellt, um die Feldgeräte-typspezifischen Webseiten auf einer Anzeigeeinheit verfügbar zu machen und eine Kommunikationsanbindung zwischen dem Server und dem Feldgerät zwecks Bedienung des Feldgerätes herzustellen.

Bei dieser Vorrichtung ist vorgesehen, dass das Bedienprogramm, das den Webbrowser zur Verfügung stellt, als Gerätetreiber in einer Rahmen-Applikation, insbesondere eine FDT-Rahmen-Applikation implementiert ist und dass ein Kommunikationstreiber vorgesehen ist, der die Kommunikationsanbindung zu dem jeweiligen Feldgerät herstellt.

Da die Rahmen-Applikation bei der bekannten Vorrichtung in der Bedieneinheit implementiert ist, benötigt die Bedieneinheit eine hohe Rechenleistung; denn in der Rahmen-Applikation laufen sowohl die Logik-Gerätetreiber-Komponenten als auch die Benutzeroberflächen-Gerätetreiber-Komponenten. Die Fernbedienung von Feldgeräten in räumlich entfernten Automatisierungsanlagen ist mit der Vorrichtung nicht möglich, da ansonsten sämtliche Gerätetreiber und Kommunikations-Gerätetreiber in dem Bediengerät installiert sein müssten, was sowohl die Rechenleistung als auch die Speicherkapazität sprengen dürfte.

Davon ausgehend liegt der vorliegenden Erfindung die Aufgabe zugrunde, ein Verfahren und eine Vorrichtung der eingangs genannten Art derart weiterzubilden, dass die Konfigurierung und der Betrieb von Feldgeräten in räumlich verteilten Automatisierungssystemen flexibler und vereinfacht wird. Zudem soll die Erweiterbarkeit von solchen automatisierten Anlagen durch das Hinzufügen von neuen Feldgeräten oder Systemen und die Kommunikationsmöglichkeiten für die die Field Device Technologie (FDT) nutzenden Feldgeräte verbessert werden.

Die Aufgabe wird erfindungsgemäß u.a. dadurch gelöst, dass die Gerätetreiber-Pakete aller Feldgeräte der Automatisierungsanlagen sowie die Kommunikations-Gerätetreiber-Pakete in Kopie zentral in einer Client-Rahmen-Applikation installiert werden, die auf einem dem Bediengerät zugeordneten und außerhalb der Feldgeräte angeordneten Server läuft, dass in der Client-Rahmen-Applikation des Servers ausschließlich webbasierte Benutzeroberflächen-Gerätetreiber-Komponenten ablaufen, dass in der Server-Rahmen-Applikation der Feldgeräte-Management-Module ausschließlich die Logik-Gerätetreiber-Komponenten ablaufen und dass eine Feldgeräte-typspezifische Benutzeroberfläche zumindest eines Gerätetreibers bzw. Kommunikations-Gerätetreibers durch einen mit der Client-Rahmen-Applikation gekoppelten Webserver als Webseite zur Verfügung gestellt und in einem von dem Bediengerät zur Verfügung gestellten Webbrowser geladen und angezeigt wird.

Gemäß der Erfindung ist vorgesehen, dass die webbasierten Benutzeroberflächen-Gerätetreiber-Komponenten, welche die Benutzeroberflächen der Feldgeräte zur Verfügung stellen, ausschließlich in einer zentralen Client-Rahmen-Applikation ablaufen, die auf einem dem Bediengerät zugeordneten und außerhalb der Feldgeräte angeordneten Server installiert ist, dass eine Benutzeroberfläche eines entsprechenden Feldgerätes durch einen mit der Client-Rahmen-Applikation gekoppelten Webserver als Webseite zur Verfügung gestellt wird und dass die Webseite in einen von dem Bediengerät zur Verfügung gestellten Webbrowser geladen und auf einer Anzeigeeinheit angezeigt wird. In der Server-Rahmen-Applikation der Feldgeräte-Management-Module laufen ausschließlich die Logik-Gerätetreiber-Komponenten, welche die Daten und Funktionen der Feldgeräte sowie die physikalische Verbindung zu den Feldgeräten zur Verfügung stellen.

Durch das erfindungsgemäße Verfahren wird gegenüber dem Stand der Technik der Vorteil erreicht, dass die speicherintensiven Benutzeroberflächen-Gerätetreiber-Komponenten aus den Feldgeräte-Management-Modulen ausgelagert und in einer auf dem Server laufenden Client-Rahmen-Applikation betrieben werden.

Durch die Trennung der Logik-Gerätetreiber-Komponente von der Benutzeroberflächen-Gerätetreiber-Komponente kann das Feldgeräte-Management-Modul unabhängig von der Benutzeroberflächen-Gerätetreiber-Komponente laufen, so dass keine Peripherie wie Monitor oder Tastatur benötigt wird. Folglich kann ein Rechnersystem wie Ein-Chip-Computer mit geringen Hardwareressourcen zum Einsatz kommen.

Daher werden sowohl das Bediengerät als auch die Feldgeräte-Management-Module entlastet. Durch den Server wird ein zentraler Zugangspunkt zu den Benutzeroberflächen bereit gestellt, so dass zwischen dem Bediengerät und den Logik-Gerätetreiber-Komponenten, die in den feldbusseitigen Server-Rahmen-Applikationen ablaufen, ausschließlich Daten der Feldgeräte wie z.B. Geräteparameter, Messwerte, Diagnoseinformationen und/oder Statusinformation ausgetauscht werden müssen. Daher besteht keine Notwendigkeit, dass den Feldgeräte-Management-Modulen eine Anzeigeeinheit zugeordnet ist. Folglich können die Server-Rahmen-Applikationen, in denen nur die Logik-Gerätetreiber-Komponenten ablaufen, in Kleinrechnern oder in Ein-Chip-Systemen implementiert werden.

Gemäß einer bevorzugten Verfahrensweise ist vorgesehen, dass die Kommunikation zwischen der Client-Applikation und der Service-Rahmen-Applikation über eine Webservice-Schnittstelle erfolgt und dass die Daten und Funktionen der entsprechenden Logik-Gerätetreiber-Komponente oder Benutzeroberflächen-Gerätetreiber-Komponente in den Webbrowser geladen und in der Feldgeräte-typspezifischen Benutzeroberfläche angezeigt werden.

Folglich werden über die Kommunikationsverbindung nur Daten wie Geräteparameter, Messwerte, Diagnoseinformationen u.a. ausgetauscht, ohne dass der Austausch von Benutzeroberflächen erforderlich ist.

Eine weitere Verfahrensweise zeichnet sich dadurch aus, dass der Server mittels einer Anlagen-Management-Einheit eine Anlagen-Topologie der Automatisierungsanlagen als Webseite zur Verfügung stellt, die zur Anzeige in den Webbrowser geladen wird.

Darüber hinaus ist vorgesehen, dass nach Auswahl der zu bedienenden Automatisierungsanlage aus der Anlagen-Topologie eine Kommunikationsverbindung zu der entsprechenden Server-Rahmen-Applikation der Automatisierungsanlage hergestellt wird und dass eine Feldgeräte-Topologie der Feldgeräte geladen und angezeigt wird und dass nach Auswahl eines Feldgerätes aus der Feldgeräte-Topologie eine Kommunikationsverbindung zu der entsprechenden Logik-Gerätetreiber-Komponente hergestellt wird und dass Daten und Funktionen des entsprechenden Feldgerätes in dem Webbrowser zur Verfügung gestellt werden. Dies erfolgt über die webbasierte Client-Rahmen-Applikation, die von dem Server bereitgestellt wird.

Eine weitere Ausführungsform des Verfahrens zeichnet sich dadurch aus, dass ein Datenaustausch zwischen der Server-Rahmen-Applikation und dem entsprechenden Feldgerät über die Kommunikations-Gerätetreiber-Komponente ausgeführt wird, die in der Server-Rahmen-Applikation installiert ist. Folglich muss in dem Bediengerät kein Kommunikations-Gerätetreiber installiert werden. Nur die Benutzeroberfläche zum Konfigurieren der Kommunikationsparameter des Kommunikations-Gerätetreibers wird auf dem Bediengerät benötigt.

Besonders hervorzuheben ist auch, dass der Webbrowser des Bediengerätes über den Webserver Zugriff auf Daten und Funktionen aller Benutzeroberflächen-Gerätetreiber-Komponenten und über die Webservice-Schnittstelle Zugriff auf Daten und Funktionen aller Logik-Gerätetreiber-Komponenten der entsprechenden Gerätetreiber oder Kommunikations-Gerätetreiber hat. Folglich kann mit nur einem Zugangspunkt auf sämtliche Bedienoberflächen der in den Automatisierungsanlagen enthaltenen Gerätetreiber oder Kommunikations-Gerätetreiber zugergriffen werden.

Des Weiteren bezieht sich die Erfindung auf eine Anordnung zur Fernbedienung von zumindest einem Feldgerät in zumindest einer Automatisierungsanlage mittels eines Bediengerätes, wobei einer der zumindest einen Automatisierungsanlage zugeordneten Feldgeräte-Management-Komponente eine Server-Rahmen-Applikation zugeordnet ist, wobei in der Server-Rahmen-Applikation Gerätetreiber-Pakete und zumindest ein Kommunikations-Gerätetreiber-Paket zum Bedienen der Feldgeräte der Automatisierungsanlage installiert sind, wobei die Gerätetreiber-Pakete und das Kommunikations-Gerätetreiber-Paket jeweils eine Logik-Gerätetreiber-Komponente aufweisen, welche Daten und Funktionen der Feldgeräte zur Verfügung stellt sowie eine Benutzeroberflächen-Gerätetreiber-Komponente aufweisen, welche Daten und Funktionen einer Benutzeroberfläche des Gerätetreibers oder Kommunikations-Gerätetreibers zur Verfügung stellt und wobei das Bediengerät eine Client-Applikation aufweist, um eine Kommunikationsverbindung mit der Server-Rahmen-Applikation nach dem Client-Server-Prinzip herzustellen und um Feldgeräte-typspezifische Informationen auf einer Anzeigeeinheit des Bediengerätes darzustellen.

Eine derartige Anordnung zeichnet sich gegenüber dem Stand der Technik dadurch aus, dass die Gerätetreiber-Pakete aller Feldgeräte der Automatisierungsanlagen sowie die Kommunikations-Gerätereiber-Pakete zusätzlich zentral in einer Client-Rahmen-Applikation installiert sind, die auf einem dem Bediengerät zugeordneten und außerhalb der Feldgeräte angeordneten Server läuft, dass in der Client-Rahmen-Applikation ausschließlich die Benutzeroberflächen-Gerätetreiber-Komponenten ablaufen und dass in der Server-Rahmen-Applikation der Feldgeräte-Management-Module ausschließlich die Logik-Gerätetreiber-Komponenten ablaufen.

Gegenüber dem Stand der Technik wird bei der vorliegenden Erfindung über einen zentralen Server Zugriff auf sämtliche Benutzeroberflächen der in den Automatisierungsanlagen installierten Gerätetreiber oder Kommunikations-Gerätetreiber ermöglicht. Folglich muss in dem feldbusseitigen Feldgeräte-Management-Modul nicht zwingend eine Anzeigeeinheit und/oder eine Rahmen-Applikation für Benutzeroberflächen-Gerätetreiber-Komponenten vorhanden sein. Somit kann die Server-Rahmen-Applikation als Laufzeitumgebung für die Logik-Gerätetreiber-Komponente in Geräten mit geringer Rechen- und Speicherleistung installiert werden.

Das Feldgeräte-Management-Modul kann als Ein-Chip-Computer ohne Anzeigeneinheit ausgebildet sein, der als eigenständiges Gerät ausgebildet oder in einem Feldgerät implementiert ist.

In bevorzugter Ausführung ist vorgesehen, dass der Server einen mit der Client-Rahmen-Applikation gekoppelten Webserver aufweist, der die Feldgeräte-typspezifischen, den jeweiligen Gerätetreibern oder Kommunikations-Gerätetreibern zugeordneten webbasierten Benutzeroberflächen als Webseiten zur Verfügung stellt und dass die Client-Applikation des Bediengeräts einen Webbrowser zur Verfügung stellt, der eine erste Kommunikationsverbindung zwischen dem Webbrowser und dem Webserver des Servers herstellt um eine webbasierte Feldgeräte-typspezifische Benutzeroberfläche als Webseite auf der Anzeigeeinheit darzustellen und um eine zweite Kommunikationsverbindung zwischen dem Webbrowser und der Service-Rahmen-Applikation herzustellen, um eine Datenverbindung zwischen dem Bediengerät und den Feldgeräten herzustellen.

Zur Kommunikation mit den Feldgeräten ist vorgesehen, dass in der Server-Rahmen-Applikation ein Kommunikations-Gerätetreiber installiert ist, der die Kommunikationsanbindung zu dem jeweiligen Feldgerät herstellt.

Weiterhin ist vorgesehen, dass in der Client-Rahmen-Applikation und/oder der Server-Rahmen-Applikation ein Gerätetreiber-Katalog installiert ist, aus dem Benutzeroberflächen-Gerätetreiber-Komponenten oder Logik-Gerätetreiber-Komponenten geladen werden können, wenn z. B. ein bisher unbekanntes Feldgerät an einen Feldbus angeschlossen wird.

Zudem ist vorgesehen, dass in dem Server eine Anlagen-Management-Einheit installiert ist, welche eine Topologie in grafischer Form oder eine Liste der mit dem Server gekoppelten Automatisierungsanlagen zur Verfügung stellt, wobei die Anlagen-Topologie oder als Liste als Webseite in dem Webbrowser des Bediengerätes darstellbar ist.

Durch die Anzeige der Topologie in der Automatisierungsanlage wird die Bedienung erheblich vereinfacht, da keine zusätzliche Verbindung zu jeder Anlage separat durch den Benutzer geöffnet werden muss.

Zudem ist vorgesehen, dass das Bediengerät und der Server sowie das Bediengerät und das Feldgeräte-Management-Modul über eine Intranet- und/oder Internetverbindung miteinander kommunizieren. Vorzugsweise ist das Bediengerät ein Kleincomputer oder ein mobiles Gerät wie Smartphone oder Tablet.

Durch die reine webbasierte Anwendung wird der Vorteil erreicht, dass diese von jedem beliebigen Gerät aus, welches einen Browser hat, geöffnet werden kann. Ein Benutzer kann folglich über ein Smartphone, Tablet, Notebook oder Personal Computer auf die Anwendung zugreifen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines den Figuren zu entnehmenden bevorzugten Ausführungsbeispiels.

Es zeigen:
- Fig. 1: eine schematische Darstellung einer Anordnung zur Fernbedienung von einem Feldgerät nach dem Stand der Technik,
- Fig. 2: eine schematische Darstellung einer Anordnung zur Fernbedienung von zumindest einem Feldgerät in räumlich verteilten Automatisierungsanlagen,
- Fig. 3a: eine schematische Darstellung einer FDT-Rahmen-Applikation gemäß dem Stand der Technik,
- Fig. 3b: eine schematische Darstellung einer Client-Server-FDT-Rahmen-Applikation,
- Fig. 3c: eine schematische Darstellung einer FDT-Rahmen-Applikation basierend auf Web-Technologie,
- Fig. 4: eine schematische Darstellung einer Architektur eines Servers mit FDT-Rahmen-Applikation basierend auf Web-Technologie,
- Fig. 5: eine schematische Darstellung einer Architektur eines Feldbus-Management-Moduls mit eingebetteter FDT-Rahmen-Applikation,
- Fig. 6: eine schematische Darstellung einer Kommunikation zur zentralen Bereitstellung von Gerätetreibern,
- Fig. 7: eine schematische Darstellung einer Kommunikation zur Cloud-basierten Bereitstellung von Gerätetreibern und
- Fig. 8: eine schematische Darstellung einer Kommunikation zur verteilten Bereitstellung von Gerätetreibern.

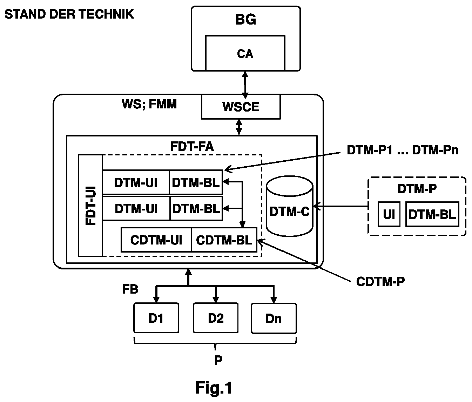

Fig. 1 zeigt eine schematische Darstellung einer Anordnung zur Fernbedienung zumindest eines Feldgerätes D1... Dn mittels eines Bediengerätes BG nach dem Stand der Technik. Dabei sind die Feldgeräte D1... Dn über einen Feldbus FB mit einem Feldgeräte-Management-Modul FMM gekoppelt, welches in einer Rechnereinheit wie Workstation WS installiert ist.

Das Feldgeräte-Management-Modul FMM umfasst ein Betriebsprogramm in Form einer standardisierten FDT-Rahmen-Applikation FDT-FA, in der mehrere Gerätetreiber-Pakete DTM-P1 ... DTM-Pn sowie ein Kommunikations-Gerätetreiber-Paket CDTM-P installiert sind. Zur Vereinfachung sind nur zwei Gerätetreiber DTM-P1, DTM-P2 und das Kommunikations-Gerätetreiber-Paket CDTM-P dargestellt.

Nach dem Stand der Technik umfassen die Gerätetreiber-Pakete DTM-P1... DTM-P2 sowohl je eine Benutzeroberflächen-Gerätetreiber-Komponente DTM-UI, die Daten und Funktionen einer Benutzeroberfläche des Gerätetreibers zur Verfügung stellt als auch je eine Logik-Gerätetreiber-Komponente DTM-BL, die Daten und Funktionen des Gerätetreibers zur Verfügung stellt. Für die standardisierte FDT-Rahmen-Applikation FDT-FA ist ergänzend eine Benutzeroberfläche FDT-UI vorgesehen. Ferner ist in der FDT-Rahmen-Applikation ein Gerätetreiber-Katalog DTM-C für weitere Gerätetreiber-Pakete implementiert, die in dem System verwendet werden oder verwendet werden können. In dieser Ausführung der FDT-Rahmen-Applikation laufen die Benutzeroberflächen-Gerätetreiber-Komponente DTM-UI, CDTM-UI und die Logik-Gerätetreiber-Komponente DTM-BL, CDTM-BL in derselben FDT-Rahmen-Applikation FDT-FA auf demselben System und erlauben eine lokale Bedienung der angeschlossenen Feldgeräte.

Zur Speicherung und Anzeige der Daten der Benutzeroberflächen-Gerätetreiber-Komponenten DTM-UI, CDTM-UI werden Hardwareressourcen in Form von Speichermitteln sowie Anzeigemitteln für grafische Benutzeroberflächen benötigt, die von Geräten mit geringen Hardwareressourcen nicht bereit gestellt werden können oder nicht vorhanden sind. Da die Bedienung nach dem Stand der Technik lokal erfolgt, muss jedes System zum Konfigurieren einer räumlich verteilten Automatisierungsanlage P1... Pk diese Ressourcen und Peripheriekomponenten aufweisen, was mit erheblichem Aufwand verbunden sein kann. Zudem muss die lokale Rechnereinheit wie Workstation mittels Softwaretools einen Remotezugang für das Bediengerät BG bereitstellen, was in vielen Anwendungen aber unerwünscht ist.

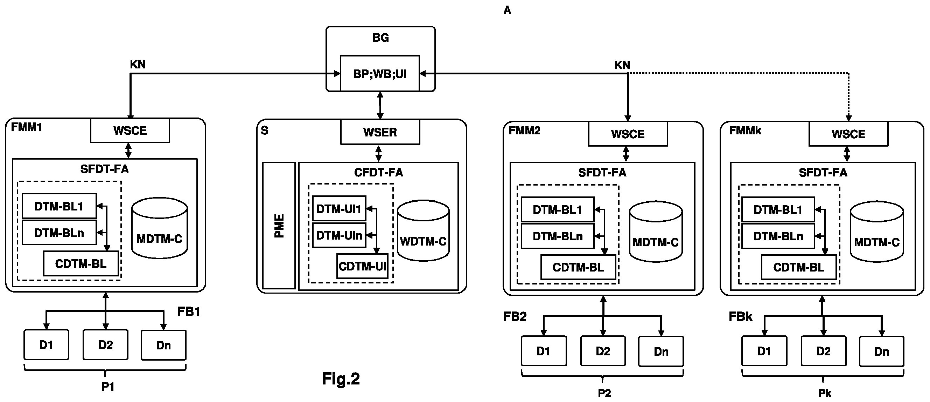

Fig. 2 zeigt eine schematische Darstellung einer erfindungsgemäßen Anordnung A zur Fernbedienung von mindestens einem Feldgerät D1, D2... Dn in räumlich verteilt angeordneten Automatisierungsanlagen P1, P2... Pk mittels eines Bediengerätes BG.

Die Automatisierungsanlagen P1, P2... Pk können z.B als Produktionsanalagen oder Energieverteilungsanlagen ausgebildet sein. Die Feldgeräte D1 ... Dn repräsentieren z.B Steuergeräte, Sensoren und/oder Aktoren.

Die Feldgeräte D1. D2... Dn einer Anlage P1 ... Pk sind jeweils über einen Feldbus FB1, FB2... FBk miteinander und mit einem Feldgeräte-Management-Modul FMM1, FMM2... FMMk verbunden, die jeweils über eine Webservice-Schnittstelle WSCE mit einem Kommunikationsnetz KN in Form einer Ethernet basierenden Infrastruktur wie Internet oder Intranet verbindbar ist.

Gemäß der Erfindung wird vorgeschlagen, dass die Gerätetreiber-Pakete sowie die Kommunikations-Gerätetreiber-Pakete sowohl in einer Server-Rahmen-Applikation SFDT-FA in den Feldgeräte-Management-Modulen FMM1 ... FMMk als auch in Kopie in einer Client-Rahmen Applikation CFDT-FA auf einem zentralen Server S installiert werden. Jedoch laufen webbasierte Benutzeroberflächen-Gerätetreiber-Komponenten DTM-UI1... DTM-UIn sowie Logik-Gerätetreiber-Komponenten DTM-BL1... DTM-BLn der Gerätetreiber-Pakete voneinander getrennt in verschiedenen Hardware-Ressourcen ab. Erfindungsgemäß laufen die Logik-Gerätetreiber-Komponenten DTM-BL 1... DTM-BLn unter Verzicht auf eine Anzeigeeinheit in den Feldgeräte-Management-Modulen und die webbasierten Benutzeroberflächen-Gerätetreiber-Komponenten DTM-UI1... DTM-UIn laufen in der Client-Rahmen-Applikation des Servers S, wobei Benutzeroberflächen UI der Gerätetreiber als Webseite in einem Webbrowser WB des Bediengerätes BG angezeigt werden.

So ist gemäß der Erfindung vorgesehen, dass die Benutzeroberflächen-Gerätetreiber-Komponenten DTM-UI1... DTM-UIn auf dem zentralen Server S gehostet werden. Hierzu umfasst der Server S die webbasierte Client-Rahmen-Applikation CFDT-FA wie FDT-Rahmen-Applikation, in der die Benutzeroberflächen-Gerätetreiber-Komponenten DTM-UI1... DTM-UIn sowie eine Benutzeroberflächen-Gerätetreiber-Komponente CDTM-UI des Kommunikations-Gerätetreibers CDTM bereitgestellt werden. Die Client-Rahmen-Applikation CFDT-FA ist ein Betriebsprogramm und bildet eine Laufzeitumgebung für die Gerätetreiber und die Kommunikations-Gerätetreiber.

Des Weiteren umfasst die Client-Rahmen-Applikation CFDT-FA einen webbasierten Gerätetreiber-Katalog WDTM-C, in dem die Gerätetreiber-Pakete verschiedener Feldgeräte gespeichert sind. Zudem ist in dem Server S eine Anlagen-Management-Einheit PME implementiert, in der eine Anlagen-Topologie der mit dem Server S verbundenen Automatisierungsanlagen P1... Pk abgebildet ist. Daneben dient die Anlagen-Management-Einheit PME zur Verwaltung der angebundenen Automatisierungsanlagen P1... Pk.

Die Logik-Gerätetreiber-Komponenten DTM-BL1... DTM-BLn werden gemäß der Erfindung jeweils ohne die zugehörigen Benutzeroberflächen-Gerätetreiber-Komponenten DTM-UI1... DTM-UIn in den entsprechenden Feldgeräte-Management-Modulen FMM1... FMMk instanziiert. Dazu weisen die Feldgeräte-Management-Module FMM1... FMMk jeweils eine eingebettete Server-Rahmen-Applikation SFDT-FA, insbesondere FDT-Rahmen-Applikation auf, die eine Laufzeitumgebung für die Logik-Gerätetreiber-Komponenten DTM-BL1... DTM-BLn sowie die Kommunikations-Gerätetreiber-Komponente CTDTM-BL bildet. Ergänzend ist in der Server-Rahmen-Applikation SFDT-FA ein Gerätetreiber-Katalog MDTM-C implementiert oder dieser zugeordnet, in dem Gerätetreiber-Pakete abgelegt sind.

Gemäß der Erfindung stellt das Bediengerät BG, z.B. ein mobiles Handgerät oder ein Personal Computer, ein Bedienprogramm mit einem Webbrowser WB zur Verfügung. Über den Webbrowser WB wird eine Kommunikationsverbindung mit einem in dem Server S implementierten Webserver WSER hergestellt, der sowohl die Client-Rahmen-Applikation als auch die von den Benutzeroberflächen-Gerätetreiber-Komponenten DTM-UI1... DTM-UIn bereitgestellten Benutzeroberflächen UI als Webseiten zur Verfügung stellt. Diese können durch den Webbrowser WB auf einer Anzeigeeinheit des Bediengerätes dargestellt werden. Die Client-Applikation zum Aufrufen der DTM-UIs ist auf Basis der Web-Technologie direkt als Webseite bzw. Web-Applikation implementiert, z. B. SPA (Single Page Web-Applikation).

In der Anlagen-Management-Einheit PME ist eine Anlagen-Topologie der Automatisierungsanlagen P1, P2... Pk abgebildet, die als Webseite in dem Webbrowser WB angezeigt werden kann. Folglich kann in dem Bediengerät BG eine der Automatisierungsanlagen P1, P2... Pk ausgewählt werden, in der das Feldgerät D1, D2... Dn enthalten ist, welches konfiguriert, bedient oder ausgelesen werden soll.

Nachdem eine Automatisierungsanlage aus der von der Anlagen-Management-Einheit PME bereit gestellten Webseite ausgewählt wurde, wird eine Haupt-Webseite der Client-Rahmen-Applikation geöffnet. Diese enthält eine Ansicht für die Geräte-Topologie, wobei Topologiedaten von dem Feldgeräte-Management-Modul FMM direkt beim Öffnen angefordert und dargestellt werden, eine Ansicht für den Gerätekatalog sowie eine Ansicht eines leeren Containers, der als Platzhalter bzw. Host für die gerätespezifischen Oberflächen DTM-UIs dient. Wird nun ein Feldgerät aus der Topologie-Liste ausgewählt, dann wird die entsprechende Benutzeroberflächen-Gerätetreiber-Komponente DTM-UI für dieses Feldgerät in den Container geladen und die gerätespezifischen Daten für diese Oberfläche werden von dem Feldgeräte-Management-Modul FMM angefordert.

Gemäß der Erfindung wird die Bedingung der konventionellen FDT-Rahmen-Applikation auf eine webbasierte Plattform gehoben, ohne die Bedienungsabläufe und das Verhalten zu ändern. Für den Benutzer ist kein Unterschied zwischen der lokalen und der webbasierten Ausführung erkennbar. Die Adressierung der aufzurufenden Webseiten erfolgt über die Identifizierung des Feldgeräts.

Nach Auswahl z.B. der Automatisierungsanlage P1 wird in dem Webbrowser WB des Bediengerätes BG ein FDT-Fenster als Webseite geöffnet, welche durch die Client-Rahmen-Applikation CFDT-FA des Servers S bereitgestellt wird.

In einem weiteren Schritt erfolgt eine Anfrage durch das Bediengerät BG über die Webservice-Schnittstelle WSCE an das Feldgeräte-Management-Modul FMM1, welche Geräte-Topologie für die ausgewählte Automatisierungsanlage P1 vorliegt.

Die Geräte-Topologie wird durch die in dem Feldgeräte-Management-Modul FMM1 eingebettete Server-Rahmen-Applikation SFDT-FA bereitgestellt und in dem Webbrowser WB des Bediengerätes BG angezeigt.

Aus Obigem ergibt sich das der Erfindung zugrunde liegende Prinzip, nämlich eine Trennung der Gerätetreiber-Pakete einerseits in Benutzeroberflächen-Gerätetreiber-Komponenten DTM-UI1... DTM-UIn und andererseits in Logik-Gerätetreiber-Komponenten DTM-BL1... DTM-BLn, die ohne die Benutzeroberflächen-Gerätetreiber-Komponenten in den verschiedenen Feldgeräte-Managementmodulen FMM1 ... FMMk ablaufen. Daraus resultiert der Vorteil, dass die Feldgeräte-Management-Module FMM1... FMMk nicht zwingend Hardwarekomponenten zur Speicherung und Darstellung von Benutzeroberflächen UI aufweisen müssen.

In dem Webbrowser WB des Bediengerätes BG wird die Geräte-Topologie der Automatisierungsanlage P1 angezeigt. Die Bereitstellung der Webseiten für den Webbrowser WB erfolgt über den Webserver WSER des Servers S. Nach Auswahl eines Feldgerätes aus der Geräte-Topologie wird ergänzend zur Topologie die entsprechende Benutzeroberfläche angezeigt. Mit Hilfe der Benutzeroberflächen-Gerätetreiber-Komponente DTM-UI können sodann Daten aus dem Feldgerät ausgelesen bzw. geändert werden. Der Austausch gerätespezifischer Daten erfolgt über die Webservice-Schnittstelle WSCE, wobei auf FDT-Daten zugegriffen wird, die in der Server-Rahmen-Applikation des Feldgeräte-Management-Moduls FMM1 abgelegt bzw. abrufbar sind. Die gerätespezifischen Daten schließen statische Daten wie Produkt-ID, Version oder IP-Adresse sowie dynamische Daten wie Messwerte und Parameter mit ein. Die Daten können von dem Gerätetreiber zwischengespeichert werden (statische Daten) oder direkt vom Feldgerät bei Bedarf ausgelesen werden, z.B. dynamische Daten, die sich schnell oder in kurzen Zeitabständen ändern.

Über den Webbrowser WB des Bediengerätes BG kann auf beliebige Feldgeräte-Management-Module FMM1... FMMk zugegriffen werden, so dass die Möglichkeit besteht, jedes einzelne Feldgerät D1, D2... Dn in einer der Automatisierungsanlagen P1, P2... Pk zu konfigurieren oder zu bedienen, einschließlich Schreib-/Leseaktionen von FDT-Daten. Dabei sind die über das Kommunikationsnetzwerk KN ausgetauschten FDT-Daten unabhängig von dem Feldbus, an dem ein Feldgerät D1 ... Dn angeschlossen ist.

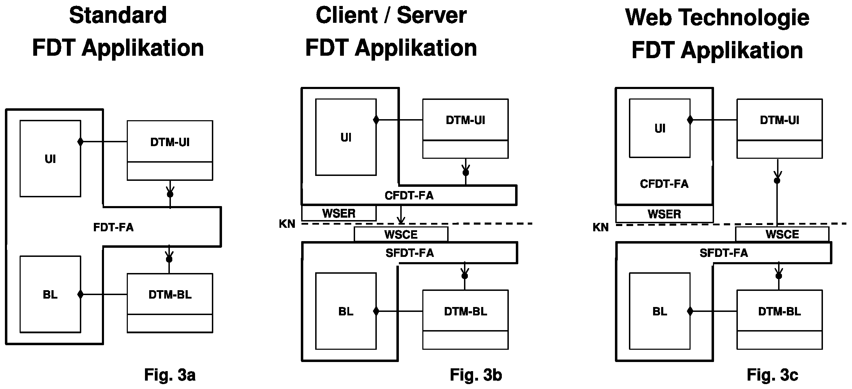

Fig. 3a bis 3c zeigen verschiedene Implementierungen von FDT-Rahmen-Applikationen.

Fig. 3a zeigt eine FDT-Rahmen-Applikation FDT-FA nach dem Stand der Technik, wobei eine einzige FDT-Rahmen-Applikation existiert, in der die Benutzeroberflächen-Gerätetreiber-Komponente DTM-UI sowie Logik-Gerätetreiber-Komponenten DTM-BL implementiert sind. Die Benutzeroberflächen-Gerätetreiber-Komponente DTM-UI sowie die Logik-Gerätetreiber-Komponenten DTM-BL kommunizieren jeweils über Schnittstellen mit der FDT-Rahmen-Applikation FDT-FA. Bei dieser Implementierung ist zwingend erforderlich, dass das Host-Gerät über genügend Speicherplatz und Einheiten zur Anzeige der grafischen Benutzeroberflächen UI verfügt. Die direkte Bedienung erfolgt nur lokal, d.h. sie ist bei diesem Konzept über Fernzugriff nicht möglich.

Fig. 3b zeigt eine FDT-Rahmen-Applikation nach dem Prinzip der Client-/Server-Kommunikation. Dabei ist vorgesehen, dass die FDT-Rahmen-Applikation in physisch getrennten Hardwareeinheiten implementiert ist, nämlich eine FDT-Client- Rahmen-Applikation CFDT-FA als Client-Einheit für Benutzeroberflächen-Gerätetreiber-Komponente DTM-UI und eine FDT-Server-Rahmen-Applikation SFDT-FA als Server-Einheit für Logik-Gerätetreiber-Komponenten DTM-BL.

Die FDT-Client-Rahmen-Applikation kann mittels verschiedener Technologien umgesetzt werden. Es besteht die Möglichkeit, die Client-Applikation als Standard PC Software umzusetzen, wobei die Kommunikation mit der Server-Applikation über eine Kommunikations-Schnittstelle wie z.B. Webservices erfolgt.

Eine andere Variante ist die Umsetzung mittels webbasierter Technologie, wie sie in diesem Konzept behandelt wird. Die FDT-Client-Rahmen-Applikation CFDT-FA ist über einen Webserver WSER implementiert und stellt eine Laufzeitumgebung für die Benutzeroberflächen-Gerätetreiber-Komponenten DTM-UI zur Anzeige von Benutzeroberflächen UI bereit. Der Zugriff durch den Benutzer erfolgt über einen Webbrowser, der die Webseiten mit den Benutzeroberflächen vom Webserver abfragt. Die Kommunikation zur serverseitigen Applikation erfolgt über eine separate Kommunikation-Schnittstelle wie einem Webservice, um die Nutzdaten auszutauschen.

Die FDT-Server-Rahmen-Applikation SFDT-FA für die Logik-Gerätetreiber-Komponenten DTM-BL ist in den Feldgeräte-Management-Modulen FMM1... FMMk implementiert und bildet eine Laufzeitumgebung für die Logik-Gerätetreiber-Komponenten DTM-BL. Die FDT-Server-Rahmen-Applikation ist über die Webservice-Schnittstelle WSCE zum Austausch von Daten zwischen den beiden getrennten Typen von FDT-Rahmen-Applikationen mit dem Kommunikationsnetzwerk KN verbunden.

Fig. 3c zeigt eine FDT-Rahmen-Applikation, die auf Web-Technologie basiert und für diese Technologie optimiert ist. Dabei ist die FDT-Client-Rahmen-Applikation CFDT-FA als Client-Einheit für Benutzeroberflächen-Gerätetreiber-Komponenten DTM-UI in dem Server S implementiert und über die Webserver-Schnittstelle WSER mit dem Kommunikationsnetzwerk KN verbunden. Die Architektur ist speziell auf die Web-Technologie ausgelegt. Dies bedeutet, dass nur wenige Daten zwischen Webbrowser und Webservices ausgetauscht werden, und dass die Implementierung der Rahmen-Applikation möglichst klein gehalten wird. Zudem ist der Datenaustausch auf die Mechanismen der Web-Technologie bestmöglich ausgerichtet.

Eine FDT-Server-Rahmen-Applikation SFDT-FA als Server-Einheit für die Logik-Gerätetreiber-Komponenten DTM-BL ist in einem der Feldgeräte-Management-Module FMM1... FMMk implementiert und über die Webservice-Schnittstelle WSCE mit dem Kommunikationsnetzwerk KN gekoppelt. Die FDT-Server-Rahmen-Applikation SFDT-FA bietet eine Laufzeitumgebung für die Logik-Gerätetreiber-Komponenten DTM-BL.

Die in Fig. 2 dargestellte Anordnung basiert auf einer Client-Server-FDT-Rahmen-Applikation mit Web bzw. Webservice Technologie gemäß Fig. 3c. Die entsprechende Anlage kann jedoch auch mit der in Fig. 3b dargestellten Client-Server-FDT-Rahmen-Applikation realisiert werden.

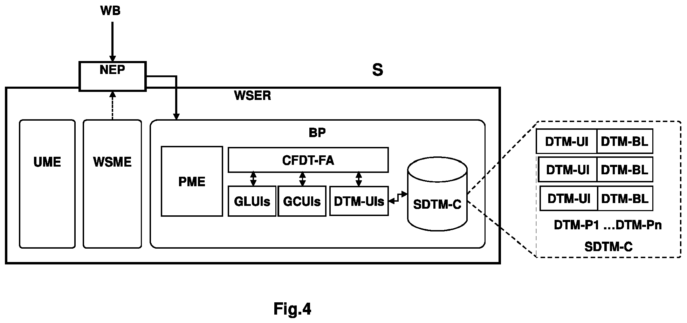

Fig. 4 zeigt eine bevorzugte Architektur des Servers S. Der Server S umfasst die Webserver-Schnittstelle WSER mit einem Netzwerk-Endpunkt NEP, der über den Webbrowser WB aufgerufen werden kann. In dem Server S ist eine Benutzer-Management-Einheit UME, eine Webserver-Management-Einheit WSME sowie ein Betriebsprogramm BP implementiert. In dem Betriebsprogramm BP läuft die Anlagen-Management-Einheit PME sowie die Client-Rahmen-Applikation CFDT-FA, vorzugsweise eine FDT-Rahmen-Applikation, als Laufzeitumgebung für allgemeine webbasierte Benutzeroberflächen-Gerätetreiber GLUIs für die Topologie-Listen, Gerätekataloge oder generische Benutzeroberflächen-Gerätetreiber GCUIs, für Geräte, für die kein passendes DTM-Paket installiert ist sowie webbasierte Benutzeroberflächen-Gerätetreiber-Komponenten DTM-UI. Die Benutzeroberflächen-Gerätetreiber-Komponenten DTM-UI können aus einem DTM-Katalog SDTM-C geladen werden. In dem DTM-Katalog sind DTM-Pakete DTM-P1... DTM-Pn gespeichert, die jeweils eine Benutzeroberflächen-Gerätetreiber-Komponente, DTM-UI1... DTM-UIn sowie eine Logik-Gerätetreiber-Komponente DTM-BL1... DTM-BLn umfassen. Die webbasierte Client-Rahmen-Applikation verarbeitet ausschließlich Benutzeroberflächen-Gerätetreiber-Komponenten DTM-UIs und keine Logik-Gerätetreiber-Komponenten DTM-BL.

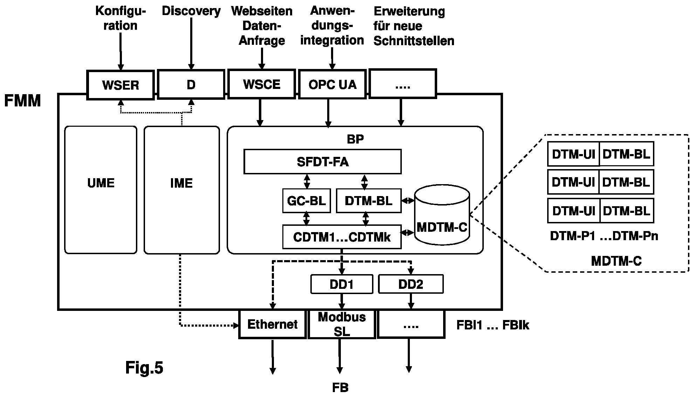

Fig. 5 zeigt in schematischer Darstellung eine Architektur des Feldgeräte-Management-Moduls FMM. Dieses umfasst eine Benutzer-Management-Einheit UME, eine Interface-Management-Einheit IME sowie ein FDT-Betriebsprogramm BP. Die Benutzer-Management-Einheit UME und die Interface-Management-Einheit IME können über die Schnittstelle "Webserver" WSER konfiguriert werden. Das IME könnte neben dem Webserver auch einen eigenen Webservice für die Konfiguration bereitstellen. Über eine Schnittstelle "Discovery" D kann die Anlagen-Management-Einheit PME eine Discovery-Anfrage starten. Auf eine Anfrage antwortet eine angefragte Komponente um der Anlagen-Management-Einheit seine Existenz und Verfügbarkeit zu signalisieren. Mittels der Interface-Management-Einheit IME können feldbusseitige Schnittstellen FBI wie Ethernet oder Modbus SL konfiguriert werden. In dem eingebetteten FDT-Betriebsprogramm BP ist eine FDT-Server-Rahmen-Applikation als Laufzeitumgebung für vorinstallierte generische Logik-Gerätetreiber GDTM-BL sowie installierte Logik-Gerätetreiber-Komponenten DTM-BL implementiert. Die Logik-Gerätetreiber-Komponenten DTM-BL können über die Kommunikationstreiber CDTM1... CDTMk sowie ggf. weitere Treiber DD1, DD2 Daten mit den Feldgeräten D1...Dn austauschen.

Die Logik-Gerätetreiber-Komponenten DTM-BL können aus DTM-Paketen DTM-P1... DTM-Pk abgeleitet werden, die in einem eingebetteten DTM-Katalog MDTM-C gespeichert sind bzw. zum Download bereit stehen.

Die eingebettete Server-Rahmen-Applikation SFDT-FA ist eine besondere Implementierung der an sich bekannten FDT-Rahmen-Applikation, die für den Einsatz ohne FDT-Benutzeroberfläche ausgelegt ist, wenn nur die DTM-BLs der Gerätetreiber zum Einsatz kommen. Somit kann diese auch für ressourcenbegrenzte Systeme optimiert und eingesetzt werden. Daraus ergeben sich ein reduzierter Hardwareaufwand sowie eine optimierte Leistungsfähigkeit. Gegenüber dem Stand der Technik wird insbesondere der Vorteil erreicht, dass die eingebettete Server-Rahmen-Applikation keine Benutzeroberflächen benötigt, da diese durch den Server S bereitgestellt und in dem Bediengerät BG angezeigt werden. Das Feldgeräte-Management-Modul FMM kann als ein Ein-Platinen-Computer wie Raspberry Pi ausgebildet sein, d.h. ohne Benutzeroberfläche und mit einem "Plug & Play" Konzept zur Installation.

Alternativ besteht die Möglichkeit, dass die Server-Rahmen-Applikation mit Gerätetreiber-Logik DTM-BL in einem Steuergerät wie SPS eingebettet ist. Dies würde eine zusätzliche Hardware für die Anbindung an eine Konfigurationsebene von FDT überflüssig machen.

Die eingebettete Server-Rahmen-Applikation kann ebenfalls auf einem spezifischen FDT-Mikrokontroller-Chip ablaufen, der in einer Steuereinheit wie SPS oder einem Gerät angeordnet ist, das einen FDT-Task bearbeiten kann. Dies hätte den Vorteil, dass der Hauptbetriebsablauf einer Steuerung nicht beeinflusst oder gestört wird, da die FDTbasierenden Prozesse auf Hardwareebene voneinander getrennt ablaufen würden.

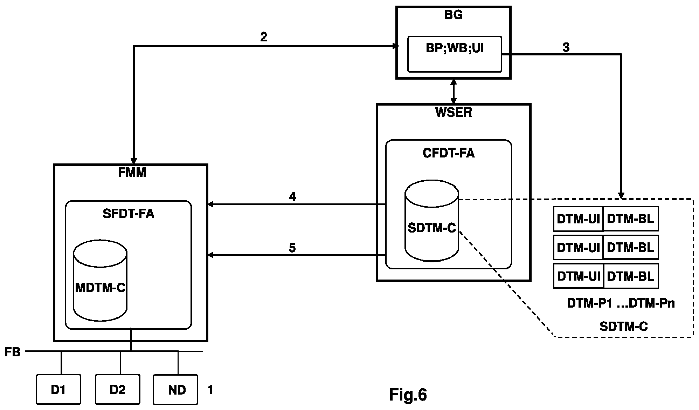

Die Fig. 6 bis 8 zeigen in schematischer Darstellung Interaktions- und Kommunikations-Mechanismen zur Bereitstellung von Gerätetreiber-Paketen DTM-P oder Kommunikations-Gerätetreiber-Paketen CDTM-P für Geräte ND wie Feldgeräte oder Gateways, die neu an den Feldbus FB angeschlossen werden und für die kein entsprechendes Gerätetreiber-Paket DTM-P, CDTM-P auf dem lokalen System FMM installiert ist.

Fig. 6 zeigt den Ansatz zur zentralen Bereitstellung der Gerätetreiber-Pakete DTM-P1 ... DTM-Pn für ein neu an den Feldbus FB angeschlossenes Feldgerät ND. In einem ersten Schritt wird das neue Feldgerät ND an den Feldbus FB angeschlossen. Sodann erfolgt in einem zweiten Schritt mit Hilfe des Bediengeräts BG eine Suche nach dem neuen Feldgerät ND in der Anlagen-Topologie. Nach Auffinden des neuen Feldgerätes ND wird in einem dritten Schritt überprüft, ob ein geeignetes Gerätetreiber-Paket DTM-P für das neue Gerät ND verfügbar ist. Die Suche erfolgt in dem mit dem Webserver WSER verknüpften Gerätetreiber-Katalog SDTM-C, um die entsprechenden Benutzeroberflächen-Gerätetreiber-Komponenten DTM-UI installieren und die Benutzeroberfläche darstellen zu können.

In einem vierten Schritt wird die Verfügbarkeit des Logik-Gerätetreibers DTM-BL überprüft, um diesen sodann in einem fünften Schritt in der eingebetteten FTD-Server-Rahmen-Applikation SFDT-FA zu installieren, falls dieser noch nicht zur Verfügung steht. Die Installation der Logik-Gerätetreiber-Komponente DTM-BL erfolgt über den Austausch des kompletten Gerätetreiber-Pakets DTM-P vom Web-Server-Katalog SDTM-C zum eingebetteten Katalog MDTM-C des Feldgeräte-Management-Moduls FMM.

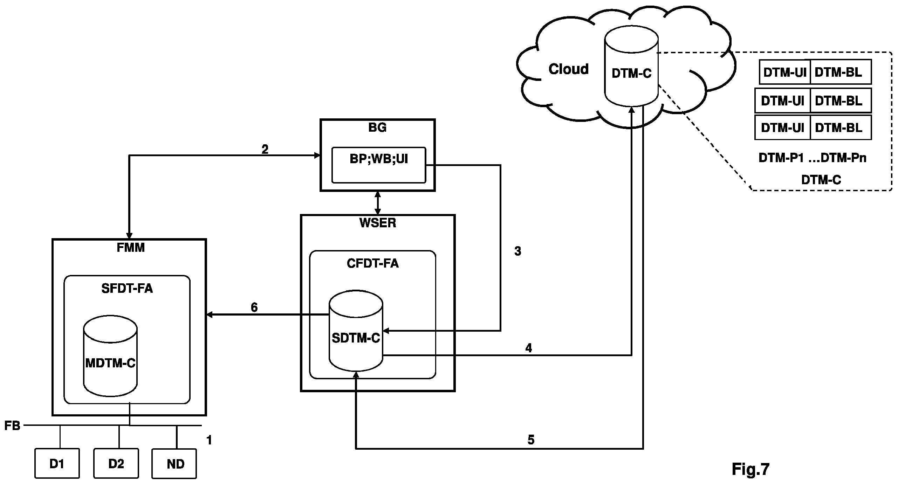

Fig. 7 zeigt in schematischer Darstellung einen Ansatz zur Bereitstellung eines Gerätetreiber-Pakets DTM-P in einem serverseitigen Gerätetreiber-Katalog SDTM-C aus einem dezentralen DTM-Katalog DTM-C eines dezentralen Netzwerkes DN wie Cloud.

Nachdem das neue Gerät ND in einem ersten Schritt an den Feldbus FB angeschlossen und in einem zweiten Schritt das neue Gerät ND durch das Bediengerät BG gefunden wurde, wird in einem dritten Schritt die Verfügbarkeit eines Gerätetreiber-Paketes DTM-P zunächst in dem Gerätetreiber-Katalog SDTM-C des Servers S überprüft.

Wird ein entsprechendes Gerätetreiber-Paket DTM-P in dem Gerätetreiber-Katalog SDTM-C nicht aufgefunden, wird in einem vierten Schritt eine Verbindung zu dem dezentralen DTM-Katalog DTM-C aufgebaut, d.h. einem externen Speicher, in dem die Gerätetreiber-Pakete DTM-P 1... DTM-Pn abgelegt sind und geladen werden können. Wird dort auch kein passendes Gerätetreiber-Paket DTM-P gefunden, kann einer der generischen Gerätetreiber GCDTM verwendet werden.

Sodann wird in einem fünften Schritt das entsprechende Gerätetreiber-Paket DTM-P aus dem DTM-Katalog DTM-C in den serverseitigen DTM-Katalog SDTM-C geladen und in der FDT-Client-Rahmen-Applikation CFDT-FA des Servers S installiert, um die Benutzeroberfläche UI für das neue Gerät als Web seite durch den Webserver WSER zur Verfügung stellen zu können. In einem sechsten Schritt wir das Gerätetreiber-Paket DTM-P in die eingebettete FDT-Server-Rahmen-Applikation SFDT-FA geladen und installiert, so dass die entsprechende Logik-Gerätetreiber-Komponente DTM-BL eingesetzt werden kann.

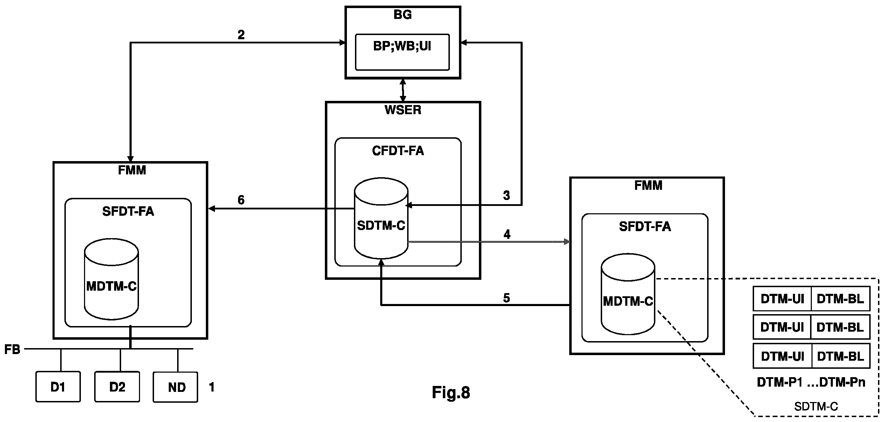

Fig. 8 zeigt in schematischer Darstellung einen Ansatz zur verteilten Bereitstellung von Gerätetreiber-Paketen DTM-P 1... DTM-Pn. Sollte das Gerätetreiber-Paket DTM-P in dem DTM-Katalog SDTM-C des Servers S nicht aufgefunden werden können, erfolgt in einem vierten Schritt die Suche nach Gerätetreiber-Paketen DTM-P in weiteren Feldgeräte-Management-Modulen FMM mit eingebetteten FDT-Server-Rahmen-Applikationen SFDT-FA und eingebetteten DTM-Katalogen MDTM-C. Nach Auffinden eines geeigneten Gerätetreiber-Pakets DTM-P wird dieses aus dem Feldgeräte-Management-Modul FMM in den Gerätetreiber-Katalog SDTM-C des Servers S geladen und in einem sechsten Schritt in die eingebettete FDT-Server-Rahmen-Applikation SFDT-FA des Feldgeräte-Management-Moduls FMM installiert, an der das neue Gerät ND angeschlossen ist.

Betreffend die Benutzeroberflächen-Gerätetreiber-Komponenten DTM-UI ist anzumerken, dass diese aus verschiedenen Konstellationen bestehen können. Nach dem Stand der Technik sind für Legacy-Anwendungen konventionelle wie WPF basierte Benutzeroberflächen-Gerätetreiber-Komponenten bekannt. Auch sind webbasierte Pakete bekannt, die auf Web-Technologie basieren sowie Kombinations-Pakete, die sowohl eine konventionelle Komponente als auch eine webbasierte Komponente enthalten. Für die vorliegende
Erfindung wird ein Gerätetreiber-Paket mit zumindest einer webbasierten Benutzeroberflächen-Gerätetreiber-Komponente vorausgesetzt.

## Patentansprüche

1. Verfahren zur Fernbedienung von zumindest einem Feldgerät (D1... Dn) in zumindest einer Automatisierungsanlage (P1... Pk) mit einem Bediengerät (BG), wobei in dem Bediengerät ein Bedienprogramm (BP) abläuft, das mit einer Server-Rahmen-Applikation (SFDT-FA) kommuniziert, die auf einem der zumindest einen Automatisierungsanlage (P1... Pk) zugeordneten Feldgeräte-Management-Modul (FMM1... FMMk) abläuft und zum Bedienen der Feldgeräte (D1... Dn) der entsprechenden Automatisierungsanlage (P1... Pk) dient, wobei in der Server-Rahmen-Applikation (SFDT-FA) Gerätetreiber-Pakete (DTM-P1... DTM-Pk) und zumindest ein Kommunikations-Gerätetreiber-Paket (CDTM-P) zum Bedienen der Feldgeräte (D1 ... Dn) installiert sind, wobei die Gerätetreiber-Pakete (DTM-P1... DTM-Pn) und das zumindest eine Kommunikations-Gerätetreiber-Paket (CDTM-P) jeweils eine Logik-Gerätetreiber-Komponente (DTM-BL1... DTM-BLn; CDTM-BL1... CDTM-BLn) aufweisen, welche Daten und Funktionen zumindest eines der Feldgeräte zur Verfügung stellt sowie eine Benutzeroberflächen-Gerätetreiber-Komponente (DTM-UI1... DTM-UIn; CDTM-UI1 ... CDTM-UIn) aufweisen, welche Daten und Funktionen einer Benutzeroberfläche zumindest eines der Feldgeräte zur Verfügung stellt, und wobei durch das Bedienprogramm (BP) Feldgeräte-typspezifische Informationen auf einer Anzeigeeinheit darstellbar sind,
**dadurch gekennzeichnet,**
**dass** die Gerätetreiber-Pakete (DTM-P1 ... DTM-Pn) aller Feldgeräte (D1... Dn) der Automatisierungsanlagen (P1... Pk) sowie die Kommunikations-Gerätetreiber-Pakete (CDTM-P) in Kopie zusätzlich zentral in einer Client-Rahmen-Applikation (CFDT-FA) installiert werden, die auf einem dem Bediengerät (BG) zugeordneten und außerhalb der Feldgeräte (D1 ... Dn) angeordneten Server (S) läuft, dass in der Client-Rahmen-Applikation (CFDT-FA) des Servers (S) ausschließlich webbasierte Benutzeroberflächen-Gerätetreiber-Komponenten (DTM-UI1... DTM-UIn; CDTM-UI1 ... CDTM-UIn) ablaufen, dass in der Server-Rahmen-Applikation (SFDT-FA) der Feldgeräte-Management-Module (FMM1... FMMk) ausschließlich die Logik-Gerätetreiber-Komponenten (DTM-BL1... DTM-BLn; CDTM-BL1... CDTM-BLn) ablaufen und dass Feldgeräte-typspezifische Benutzeroberfläche zumindest eines Gerätetreibers bzw. Kommunikations-Gerätetreibers durch einen mit der Client-Rahmen-Applikation (CA) gekoppelten Webserver (WSER) als Webseite zur Verfügung gestellt und in einem von der dem Bediengerät (BG) zur Verfügung gestellten Webbrowser (WB) geladen und angezeigt wird.

2. Verfahren nach Anspruch 1,
**dadurch gekennzeichnet,**
**dass** die Kommunikation zwischen dem Bedienprogramm (BP) und der Service-Rahmen-Applikation (SFDT-FA) über eine Webservice-Schnittstelle (WSCE) erfolgt und dass die Daten und Funktionen der entsprechenden Logik-Gerätetreiber-Komponente oder Benutzeroberflächen-Gerätetreiber-Komponente in den Webbrowser (WB) geladen und in der Feldgeräte-typspezifischen Benutzeroberfläche angezeigt werden.

3. Verfahren nach Anspruch 1 oder 2,
**dadurch gekennzeichnet,**
**dass** der Server (S) mittels einer Anlagen-Management-Einheit (PME) eine Anlagen-Topologie der Automatisierungsanlagen (P1... Pk) als Webseite zur Verfügung stellt, die zur Anzeige in den Webbrowser (WB) geladen wird.

4. Verfahren nach zumindest einem der vorhergehenden Ansprüche,
**dadurch gekennzeichnet,**
**dass** nach Auswahl der gewünschten Automatisierungsanlage (P1 ... Pk) aus der Anlagen-Topologie eine Kommunikationsverbindung zu der entsprechenden Server-Rahmen-Applikation (SFDT-FA) der ausgewählten Automatisierungsanlage (P1 ... Pk) hergestellt wird und dass eine Feldgeräte-Topologie der Feldgeräte (D1 ... Dn) geladen und angezeigt wird, dass nach Auswahl eines Feldgerätes eine Kommunikationsverbindung zu der entsprechenden Logik-Gerätetreiber-Komponente (DTM-BL1... DTM-BLn) zum Austausch von Daten und Funktionen des entsprechenden Feldgerätes zwischen dem Webbrowser (WB) und der Logik-Gerätetreiber-Komponente (DTM-BL 1... DTM-BLn) hergestellt wird.

5. Verfahren nach zumindest einem der vorhergehenden Ansprüche,
**dadurch gekennzeichnet,**
**dass** die in der Benutzeroberfläche (UI) dargestellten Daten und Funktionen nach Bearbeitung in dem Bediengerät (BG) über die Kommunikationsverbindung in die Server-Rahmen-Applikation (SFDT-FA) zur Bedienung des entsprechenden Feldgerätes zurückübertragen werden.

6. Verfahren nach zumindest einem der vorhergehenden Ansprüche,
**dadurch gekennzeichnet,**
**dass** ein Datenaustausch zwischen der jeweiligen Server-Rahmen-Applikation (SFDT-FA) und dem entsprechenden Feldgerät über die Logik-Gerätetreiber-Komponente (CDTM-BL) des Kommunikations-Gerätetreiber-Pakets (CDTM-P) ausgeführt wird.

7. Verfahren nach zumindest einem der vorhergehenden Ansprüche,
**dadurch gekennzeichnet,**
**dass** der Webbrowser (WB) des Bediengerätes (BG) über den Webserver (WSER) Zugriff auf Daten und Funktionen aller Benutzeroberflächen-Gerätetreiber-Komponenten (DTM-UI1... DTM-UIn; CDTM-UI1 ... CDTM-UIn) und über die Webservice-Schnittstelle (WSCE) Zugriff auf Daten und Funktionen aller Logik-Gerätetreiber-Komponenten (DTM-BL1... DTM-BLn; CDTM-BL) der entsprechenden Gerätetreiber oder Kommunikations-Gerätetreiber hat.
die Anordnung umfassend das genannte Bediengerät (BG), zumindest ein Feldgeräte-Management-Modul (FMM1... FMMk) und einen Server (S),

8. Anordnung (A) zur Fernbedienung von zumindest einem Feldgerät (D1... Dn) in zumindest einer Automatisierungsanlage (P1... Pk) mittels eines Bediengerätes (BG), wobei einem der zumindest einen Automatisierungsanlage (P1... Pk) zugeordneten Feldgeräte-Management-Modul (FMM1 ... FMMk) eine Server-Rahmen-Applikation (SFDT-FA) zugeordnet ist, die zum Bedienen der Feldgeräte der Automatisierungsanlage dient, wobei in der Server-Rahmen-Applikation (SFDT-FA) Gerätetreiber-Pakete (DTM-P1... DTM-Pn) und zumindest ein Kommunikations-Gerätetreiber-Paket (CDTM-P) zum Bedienen der Feldgeräte der Automatisierungsanlage installiert sind, wobei die Gerätetreiber-Pakete (DTM-P1... DTM-Pn) und das Kommunikations-Gerätetreiber-Paket (CDTM-P) jeweils eine Logik-Gerätetreiber-Komponente (DTM-BL1 ... DTM-BLn; CDTM-BL) aufweisen, welche Daten und Funktionen der Feldgeräte zur Verfügung stellt sowie eine Benutzeroberflächen-Gerätetreiber-Komponente (DTM-UI1... DTM-UIn; CDTM-UI) aufweisen, welche Daten und Funktionen einer Benutzeroberfläche des Gerätetreibers oder Kommunikations-Gerätetreibers zur Verfügung stellt und wobei das Bediengerät (BG) ein Bedienprogramm (BP) aufweist, um eine Kommunikationsverbindung mit der Server-Rahmen-Applikation (SFDT-FA) herzustellen und um Feldgeräte-typspezifische Informationen auf einer Anzeigeeinheit des Bediengerätes (BG) darzustellen,
**dadurch gekennzeichnet,**
**dass** die Gerätetreiber-Pakete (DTM-P1... DTM-Pn) aller Feldgeräte (D1... Dn) der Automatisierungsanlagen (P1... Pk) sowie die Kommunikations-Gerätetreiber-Pakete (CDTM-P) zusätzlich zentral in einer Client-Rahmen-Applikation (CFDT-FA) installiert sind, die auf dem dem Bediengerät (BG) zugeordneten und außerhalb der Feldgeräte (D1... Dn) angeordneten Server (S) läuft, dass in der Client-Rahmen-Applikation (CFDT-FA) ausschließlich die Benutzeroberflächen-Gerätetreiber-Komponenten (DTM-UI1... DTM-UIn; CDTM-UI) ablaufen, das in der Server-Rahmen-Applikation (SFDT-FA) der Feldgeräte-Management-Module (FMM1... FMMk) ausschließlich die Logik-Gerätetreiber-Komponenten (DTM-BL1 ... DTM-BLn; CDTM-BL) ablaufen und dass der Server (S) einen mit der Client-Rahmen-Applikation (CFDT-FA) gekoppelten Webserver (WSER) aufweist, der die Feldgeräte-typspezifischen, den jeweiligen Gerätetreiber-Paketen und Kommunikations-Gerätetreiber-Paketen zugeordneten Benutzeroberflächen als Webseiten zur Verfügung stellt und dass das Bedienprogramm (BP) des Bediengeräts (BG) einen Webbrowser (WB) zur Verfügung stellt, der eine erste Kommunikationsverbindung zwischen dem Webbrowser (WB) und dem Webserver (WSER) des Servers (S) herstellt, um eine webbasierte Feldgeräte-typspezifische Benutzeroberfläche als Webseite auf der Anzeigeeinheit darzustellen und der eine zweite Kommunikationsverbindung zwischen dem Webbrowser (WB) und der Service-Rahmen-Applikation (SFDT-FA) zur Verfügung stellt, um eine Datenverbindung zwischen dem Bediengerät (BG) und den Feldgeräten (D1... Dn) herzustellen.
dem Dn) herzustellen.

9. Anordnung nach zumindest einem der Ansprüche 8 bis 12,
**dadurch gekennzeichnet,**
**dass** das Feldgeräte-Management-Modul (FMM1... FMMk) als Ein-Chip-Computer ohne Anzeigeneinheit ausgebildet ist.

10. Anordnung nach Anspruch 8 oder 9,
**dadurch gekennzeichnet,**
**dass** das Feldgeräte-Management-Modul (FMM1... FMMk) als eigenständiges Gerät ausgebildet oder in einem Feldgerät (D1 ...Pn) implementiert ist.

11. Anordnung nach zumindest einem der Ansprüche 8 bis 10,
**dadurch gekennzeichnet,**
**dass** die Client-Rahmen-Applikation (CFDT-FA) und die Server-Rahmen-Applikation (SFDT-FA) eine Laufzeitumgebung für die Gerätetreiber-Pakete (DTM-P1...DTM-Pn) bilden.

12. Anordnung nach zumindest einem der Ansprüche 8 bis 10,
**dadurch gekennzeichnet,**
**dass** der Client-Rahmen-Applikation (CFDT-FA) und/oder der Server-Rahmen-Applikation (SFDT-FA) ein Gerätetreiber-Katalog (SDTM-C; MDTM-C) zugeordnet ist, in dem die Gerätetreiber-Pakete (DTM-P1... DTM-Pn) und die Kommunikations-Gerätetreiber-Pakete (CDTM-P) für eine Installation verfügbar sind.

13. Anordnung nach zumindest einem der Ansprüche 8 bis 11,
**dadurch gekennzeichnet,**
**dass** in dem Server (S) eine Anlagen-Management-Einheit (PME) installiert ist, welche eine grafische Topologie oder einer Liste der mit dem Server (S) gekoppelten Automatisierungsanlagen (P1... Pk) zur Verfügung stellt, wobei die Anlagen-Topologie oder die Liste als Webseite in dem Webbrowser (WB) des Bediengerätes (BG) darstellbar ist.

14. Anordnung nach zumindest einem der Ansprüche 8 bis 13,
**dadurch gekennzeichnet,**
**dass** die das Bediengerät (BG) und der Server (S) sowie das Bediengerät (BG) und die Feldgeräte-Management-Komponente (FMM) über eine Intranet- und/oder Internet-Verbindung miteinander kommunizieren.

15. Anordnung nach zumindest einem der Ansprüche 8 bis 14,
**dadurch gekennzeichnet,**
**dass** das Bediengerät (BG) ein Kleincomputer oder ein mobiles Gerät wie Smartphone oder Tablet ist.

## Claims

1. Method for remote control of at least one field device (D1 ... Dn) in at least one automation system (P1 ... Pk) with an operating device (BG), where an operating program (BP) runs in said operating device and communicates with a server-frame application (SFDT-FA) that runs on one of the field device management modules (FMM1 ... FMMk) assigned to the at least one automation system (P1 ... Pk) and serves to operate the field devices (D1 ... Dn) of the corresponding automation system (P1 ... Pk), where device driver packages (DTM-P1 ... DTM-Pk) and at least one communication device driver package (CDTM-P) for operating the field devices (D1 ... Dn) are installed in the server frame application (SFDT-FA), where the device driver packages (DTM-P1 ... DTM-Pn) and the at least one communication device driver package (CDTM-P) each have a logic device driver component (DTM-BL1 ... DTM-BLn; CDTM-BL1 ... CDTM-BLn) which provides data and functions of at least one of the field devices and a user interface device driver component (DTM-UI1 ... DTM-UIn; CDTM-UI1 ... CDTM-UIn) which provides data and functions of a user interface of at least one of the field devices, and where field device type-specific information is displayable by the operating program (BP) on a display unit,
**wherein**
the device driver packages (DTM-P1 ... DTM-Pn) of all field devices (D1 ... Dn) of the automation systems (P1 ... Pk) and the communication device driver packages (CDTM-P) are additionally installed centrally in copy in a client-frame application (CFDT-FA) which runs on a server (S) assigned to the operating device (BG) and arranged outside the field devices (D1 ... Dn), exclusively web-based user interface device driver components (DTM-UI1 ... DTM-UIn; CDTM-UI1 ... CDTM-UIn) run in the client-frame application (CFDT-FA) of the server (S), exclusively the logic device driver components (DTM-BL1 ... DTM-BLn; CDTM-BL1 ... CDTM-BLn) run in the server-frame application (SFDT-FA) of the field device management modules (FMM1 ... FMMk), and the field device type-specific user interface of at least one device driver or communication device driver is provided by a web server (WSER) linked to the client-frame application (CA) as a website and is loaded and displayed in a web browser (WB) provided by the operating device (BG).

2. Method according to claim 1,
**wherein**
communication between the operating program (BP) and the service frame application (SFDT-FA) is via a web service interface (WSCE) and the data and functions of the corresponding logic device driver component or user interface device driver component are loaded into the web browser (WB) and displayed in the field device type-specific user interface.

3. Method according to claim 1 or 2,
**wherein**
the server (S) provides by means of a system management unit (PME) a system topology of the automation systems (P1 ... Pk) as a website which is loaded into the web browser (WB) for display.

4. Method according to at least one of the preceding claims,
**wherein**
after selection of the required automation system (P1 ... Pk) from the system topology a communication link is established to the corresponding server-frame application (SFDT-FA) of the selected automation system (P1 ... Pk), a field device topology of the field devices (D1 ... Dn) is loaded and displayed, and after selection of a field device a communication link is established to the corresponding logic device driver component (DTM-BL1 ... DTM-BLn) for exchange of data and functions of the corresponding field device between the web browser (WB) and the logic device driver component (DTM-BL1 ... DTM-BLn).

5. Method according to at least one of the preceding claims,
**wherein**
the data and functions displayed in the user interface (UI) after processing in the operating device (BG) are transferred via the communication link back into the server-frame application (SFDT-FA) for operation of the corresponding field device.

6. Method according to at least one of the preceding claims,
**wherein**
a data exchange between the respective server-frame application (SFDT-FA) and the corresponding field device is performed via the logic device driver component (CDTM-BL) of the communication device driver package (CDTM-P).

7. Method according to at least one of the preceding claims,
**wherein**
the web browser (WB) of the operating device (BG) has via the web server (WSER) access to data and functions of all user interface device driver components (DTM-UI1 ... DTM-UIn; CDTM-UI1 ... CDTM-UIn) and via the web service interface (WSCE) access to data and functions of all logic device driver components (DTM-BL1 ... DTM-BLn; CDTM-BL) of the corresponding device drivers or communication device drivers.

8. Arrangement (A) for remote control of at least one field device (D1 ... Dn) in at least one automation system (P1 ... Pk) by means of an operating device (BG), said arrangement comprising the said operating device (BG), at least one field device management module (FMM1 ... FMMk) and a server (S), where a server-frame application (SFDT-FA) is assigned to a field device management module (FMM1 ... FMMk) assigned to the at least one automation system (P1 ... Pk) and serves to operate the field devices of the automation system, where device driver packages (DTM-P1 ... DTM-Pn) and at least one communication device driver package (CDTM-P) for operating the field devices of the automation system are installed in the server-frame application (SFDT-FA), where the device driver packages (DTM-P1 ... DTM-Pn) and the communication device driver package (CDTM-P) each have a logic device driver component (DTM-BL1 ... DTM-BLn; CDTM-BL) which provides data and functions of the field devices and a user interface device driver component (DTM-UI1 ... DTM-UIn; CDTM-UI) which provides data and functions of a user interface of the device driver or communication device driver and where the operating device (BG) has an operating program (BP) in order to establish a communication link to the server-frame application (SFDT-FA) and to display field device type-specific information on a display unit of the operating device (BG),
**wherein**
the device driver packages (DTM-P1 ... DTM-Pn) of all field devices (D1 ... Dn) of the automation systems (P1 ... Pk) and the communication device driver packages (CDTM-P) are additionally installed centrally in a client-frame application (CFDT-FA) which runs on the server (S) assigned to the operating device (BG) and arranged outside the field devices (D1 ... Dn), exclusively the user interface device driver components (DTM-UI1 ... DTM-UIn; CDTM-UI) run in the client-frame application (CFDT-FA), exclusively the logic device driver components (DTM-BL1 ... DTM-BLn; CDTM-BL) run in the server-frame application (SFDT-FA) of the field device management modules (FMM1 ... FMMk), and the server (S) has a web server (WSER) linked to the client-frame application (CFDT-FA), which provides the field device type-specific user interfaces assigned to the respective device driver packages and communication device driver packages as websites, and the operating program (BP) of the operating device (BG) provides a web browser (WB) which establishes a first communication link between the web browser (WB) and the web server (WSER) of the server (S) in order to display a web-based field device type-specific user interface as a website on the display unit and which provides a second communication link between the web browser (WB) and the service frame application (SFDT-FA) in order to establish a data link between the operating device (BG) and the field devices (D1 ... Dn).

9. Arrangement according to at least one of claims 8 to 12,
**wherein**
the field device management module (FMM1 ... FMMk) is designed as a system-on-chip computer without display unit.

10. Arrangement according to claim 8 or 9,
**wherein**
the field device management module (FMM1 ... FMMk) is designed as a stand-alone device or is implemented in a field device (D1 ... Pn).

11. Arrangement according to at least one of claims 8 to 10,
**wherein**
the client-frame application (CFDT-FA) and the server-frame application (SFDT-FA) form a runtime environment for the device driver packages (DTM-P1 ... DTM-Pn).

12. Arrangement according to at least one of claims 8 to 10,
**wherein**
the client-frame application (CFDT-FA) and/or the server-frame application (SFDT-FA) are assigned a device driver catalogue (SDTM-C; MDTM-C) in which the device driver packages (DTM-P 1... DTM-Pn) and the communication device driver packages (CDTM-P) are available for installation.

13. Arrangement according to at least one of claims 8 to 11,
**wherein**
a system management unit (PME) is installed in the server (S) and provides a graphic topology or a list of the automation systems (P1 ... Pk) linked to the server (S), the system topology or the list being displayable as a website in the web browser (WB) of the operating device (BG).

14. Arrangement according to at least one of claims 8 to 13,
**wherein**
the operating device (BG) and the server (S), and the operating device (BG) and the field device management component (FMM), communicate with one another via an intranet and/or internet connection.

15. Arrangement according to at least one of claims 8 to 14,
**wherein**
the operating device (BG) is a minicomputer or a mobile device such as a smartphone or tablet.

## Revendications

1. Procédé de télécommande d'au moins un appareil de terrain (D1 ... Dn) dans au moins une installation d'automatisation (P1 ... Pk) avec un organe de commande (BG), sachant qu'est exécuté dans l'organe de commande un programme de commande (BP) qui communique avec une application cadre serveur (SFDT-FA) qui est exécutée sur un module de gestion des appareils de terrain (FMM1... FMMk) associé à une d'au moins une installation d'automatisation (P1 ... Pk) et sert à commander les appareils de terrain (D1 ... Dn) de l'installation d'automatisation correspondante (P1 ... Pk), sachant que sont installés dans l'application cadre serveur (SFDT-FA) des paquetages de pilotes (DTM-P1 ... DTM-Pk) et au moins un paquetage de pilotes de communication (CDTM-P) pour commander les appareils de terrain (D1 ... Dn), sachant que les paquetages de pilotes (DTM-P1 ... DTM-Pn) et ledit au moins un paquetage de pilotes de communication (CDTM-P) présentent chacun une composante de pilote de logique (DTM-BL1 ... DTM-BLn ; CDTM-BL1 ... CDTM-BLn) qui fournit des données et fonctions d'au moins un des appareils de terrain ainsi qu'une composante de pilote d'interfaces utilisateur (DTM-UI1 ... DTM-UIn ; CDTM-UI1 ... CDTM-UIn) qui fournit des données et fonctions d'une interface utilisateur d'au moins un des appareils de terrain, et sachant que le programme de commande (BP) permet de représenter des informations spécifiques au type d'appareils de terrain sur une unité d'affichage,
**caractérisé en ce**
**que** les paquetages de pilotes (DTM-P1 ... DTM-Pn) de tous les appareils de terrain (D1 ... Dn) des installations d'automatisation (P1 ... Pk) ainsi que les paquetages de pilotes de communication (CDTM-P) sont installés en plus en copie de manière centralisée dans une application cadre client (CFDT-FA) qui est exécutée sur un serveur (S) associé à l'organe de commande (BG) et disposé en dehors des appareils de terrain (D1 ... Dn), que dans l'application cadre client (CFDT-FA) du serveur (S) sont exécutées uniquement des composantes de pilotes d'interfaces utilisateur basées sur le web (DTM-UI1... DTM-UIn ; CDTM-UI1 ... CDTM-UIn), que seules les composantes de pilotes de logique (DTM-BL1 ... DTM-BLn ; CDTM-BL1 ... CDTM-BLn) sont exécutées dans l'application cadre serveur (SFDT-FA) des modules de gestion des appareils de terrain (FMM1 ... FMMk) et que l'interface utilisateur spécifique au type d'appareils de terrain d'au moins un pilote ou d'un pilote de communication est fournie sous forme de page web par un serveur web (WSER) couplé à l'application cadre client (CA) et est lancée et affichée dans un navigateur web (WB) fourni par l'organe de commande (BG).

2. Procédé selon la revendication 1,
**caractérisé en ce**
**que** la communication entre le programme de commande (BP) et l'application cadre du service (SFDT-FA) a lieu par le biais de l'interface du service web (WSCE) et que les données et fonctions de la composante de pilotes de logique ou de la composante de pilotes d'interfaces utilisateur correspondante sont lancées dans le navigateur web (WB) et affichées sur l'interface utilisateur spécifique au type d'appareils de terrain.

3. Procédé selon la revendication 1 ou 2,
**caractérisé en ce**
**que** le serveur (S) fournit sous forme de page web une topologie des installations d'automatisation (P1 ... Pk) au moyen d'une unité de gestion des installations (PME), laquelle topologie est lancée dans le navigateur web (WB) pour y être affichée.

4. Procédé selon au moins une des revendications précédentes,
**caractérisé en ce**
**qu'**après la sélection de l'installation d'automatisation souhaitée (P1 ... Pk) dans la topologie des installations, une liaison de communication vers l'application cadre serveur correspondante (SFDT-FA) de l'installation d'automatisation sélectionnée (P1 ... Pk) est établie et qu'est chargée et affichée une topologie des appareils de terrain (D1 ... Dn) et qu'après la sélection d'un appareil de terrain est établie une liaison de communication vers la composante de pilote de logique correspondante (DTM-BL1 ... DTM-BLn) pour échanger des données et fonctions de l'appareil de terrain correspondant entre le navigateur web (WB) et la composante de pilote de logique (DTM-BL1 ... DTM-BLn).

5. Procédé selon au moins une des revendications précédentes,
**caractérisé en ce**
**qu'**une fois traitées dans l'organe de commande (BG), les données et fonctions représentées sur l'interface utilisateur (UI) sont retransmises dans l'application cadre serveur (SFDT-FA) via la liaison de communication, pour la commande de l'appareil de terrain correspondant.

6. Procédé selon au moins une des revendications précédentes,
**caractérisé en ce**
**qu'**un échange de données entre l'application cadre serveur respective (SFDT-FA) et l'appareil de terrain correspondant est exécuté par le biais de la composante de pilote de logique (CDTM-BL) du paquetage de pilotes de communication (CDTM-P).

7. Procédé selon au moins une des revendications précédentes,
**caractérisé en ce**
**que** le navigateur web (WB) de l'organe de commande (BG) a accès via le serveur web (WSER) aux données et fonctions de toutes les composantes de pilotes d'interfaces utilisateur (DTM-UI1 ... DTM-UIn ; CDTM-UI1 ... CDTM-UIn) et via l'interface de service web (WSCE) aux données et fonctions de toutes les composantes de pilotes de logique (DTM-BL1 ... DTM-BLn ; CDTM-BL) des pilotes ou pilotes de communication correspondants.

8. Agencement (A) de télécommande d'au moins un appareil de terrain (D1... Dn) dans au moins une installation d'automatisation (P1 ... Pk) au moyen d'un organe de commande (BG), l'agencement comprenant ledit organe de commande (BG), au moins un module de gestion des appareils de terrain (FMM1 ... FMMk) et un serveur (S), sachant qu'est associée à un module de gestion des appareils de terrain (FMM1 ... FMMk) associée à l'au moins une installation d'automatisation (P1 ... Pk) une application cadre serveur (SFDT-FA) qui sert à commander les appareils de terrain de l'installation d'automatisation, sachant que sont installés dans l'application cadre serveur (SFDT-FA) des paquetages de pilotes (DTM-P1... DTM-Pn) et au moins un paquetage de pilotes de communication (CDTM-P) pour commander les appareils de terrain de l'installation d'automatisation, sachant que les paquetages de pilotes (DTM-P1 ... DTM-Pn) et le paquetage de pilotes de communication (CDTM-P) présentent chacun une composante de pilote de logique (DTM-BL1 ... DTM-BLn ; CDTM-BL) qui fournit des données et fonctions des appareils de terrain ainsi qu'une composante de pilote d'interfaces utilisateurs (DTM-UI1 ... DTM-UIn ; CDTM-UI) qui fournit des données et fonctions d'une interface utilisateur du pilote ou du pilote de communication et sachant que l'organe de commande (BG) présente un programme de commande (BP) pour établir une liaison de communication avec l'application cadre serveur (SFDT-FA) et pour représenter des informations spécifiques au type d'appareils de terrain sur une unité d'affichage de l'organe de commande (BG),
**caractérisé en ce**
**que** les paquetages de pilotes (DTM-P1 ... DTM-Pn) de tous les appareils de terrain (D1 ... Dn) des installations d'automatisation (P1 ... Pk) ainsi que les paquetages de pilotes de communication (CDTM-P) sont installés en plus de manière centralisée dans une application cadre client (CFDT-FA) qui est exécutée sur le serveur (S) associé à l'organe de commande (BG) et disposé en dehors des appareils de terrain (D1 ... Dn), que dans l'application cadre client (CFDT-FA) sont exécutées exclusivement des composantes de pilotes d'interfaces utilisateur (DTM-UI1 ... DTM-UIn ; CDTM-UI), que dans l'application cadre serveur (SFDT-FA) des modules de gestion des appareils de terrain (FMM1 ... FMMk) sont exécutées exclusivement les composantes de pilotes de logique (DTM-BL1 ... DTM-BLn ; CDTM-BL) et que le serveur (S) présente un serveur web (WSER) couplé à l'application cadre client (CFDT-FA), qui fournit sous forme de pages web les interfaces utilisateur spécifiques au type d'appareils de terrain et associées aux paquetages de pilotes et aux paquetages de pilotes de communication respectifs et que le programme de commande (BP) de l'organe de commande (BG) fournit un navigateur web (WB) qui établit une première liaison de communication entre le navigateur web (WB) et le serveur web (WSER) du serveur (S) pour représenter sous forme de page web sur l'unité d'affichage une interface utilisateur spécifique au type d'appareils de terrain et basée sur le web, et qui fournit une seconde liaison de communication entre le navigateur web (WB) et l'application cadre serveur (SFDT-FA) pour établir une liaison de données entre l'organe de commande (BG) et les appareils de terrain (D1 ... Dn).

9. Agencement selon au moins une des revendications 8 à 12,
**caractérisé en ce**
**que** le module de gestion des appareils de terrain (FMM1 ... FMMk) est conçu sous forme d'ordinateur monopuce sans unité d'affichage.

10. Agencement selon la revendication 8 ou 9,
**caractérisé en ce**
**que** le module de gestion des appareils de terrain (FMM1 ... FMMk) est implémenté sous forme d'appareil autonome ou dans un appareil de terrain (D1 ... Pn).

11. Agencement selon au moins une des revendications 8 à 10,
**caractérisé en ce**
**que** l'application cadre client (CFDT-FA) et l'application cadre serveur (SFDT-FA) constituent un environnement d'exécution pour les paquetages de pilotes (DTM-P1 ... DTM-Pn).

12. Agencement selon au moins une des revendications 8 à 10,
**caractérisé en ce**
**qu'**est associé à l'application cadre client (CFDT-FA) et/ou à l'application cadre serveur (SFDT-FA) un catalogue de pilotes (SDTM-C ; MDTM-C) dans lequel les paquetages de pilotes (DTM-P1 ... DTM-Pn) et les paquetages de pilotes de communication (CDTM-P) sont disponibles pour une installation.

13. Agencement selon au moins une des revendications 8 à 11,
**caractérisé en ce**
**qu'**est installée sur le serveur (S) une unité de gestion des installations (PME) qui fournit une topologie graphique ou une liste des installations d'automatisation (P1 ... Pk) couplées au serveur (S), sachant que la topologie des installations ou la liste est affichable sous forme de page web dans le navigateur web (WB) de l'organe de commande (BG).

14. Agencement selon au moins une des revendications 8 à 13,
**caractérisé en ce**
**que** l'organe de commande (BG) et le serveur (S) ainsi que l'organe de commande (BG) et la composante de gestion des appareils de terrain (FMM) communiquent ensemble par le biais d'une connexion Intranet et/ou Internet.

15. Agencement selon au moins une des revendications 8 à 14,
**caractérisé en ce**
**que** l'organe de commande (BG) est un mini-ordinateur ou un appareil mobile tel qu'un smartphone ou une tablette.
